# EUROPEAN PATENT APPLICATION

(11) **EP 2 536 046 A1**
(43) Date of publication of application: **19.12.2012**
(21) Application number: 11305750.9
(22) Date of filing: 15.06.2011
(51) Int. Cl.: H04J 11/00, H04W 52/34

(54) **Concept for mitigating interference from a first wireless communication system to a second wireless system**

(71) Applicant: Alcatel Lucent, 75007 Paris (FR)
(72) Inventor: Matsumoto, Michel, 94600 Choisy le Roi (FR); Thiebaut, Matthieu, 75003 Paris (FR); Wilkus, Stephen A., Lincroft, NJ New Jersey 07738 (US)
(74) Representative: 2SPL Patentanwälte

(57) **Abstract**

Embodiments relate to a concept for mitigating interference from a first wireless or mobile communication system to a second wireless system, using apparatus (10) for a base station transmitter of the first wireless communication system, the apparatus comprising means (11) for determining a transmit load of the base station transmitter, and means (12) for generating a dummy load when the determined transmit load falls below a predefined load-threshold, such that time-domain transmit signal variations of the base station transmitter are reduced due to the generated dummy load.

## Description

Embodiments of the present invention generally relate to wireless communications and, more specifically, to a concept for mitigating interference from a first wireless or mobile communication system to a second wireless system.

### Background

Wireless communication networks are steadily growing with an increasing number of systems for mobile communication being deployed. Due to the ever increasing demand for wireless communication, frequency spectrum for deploying new systems is increasingly scarce and, hence, expensive resource.

With the growing number of frequency bands to be used for wireless communication networks, there are a number of opportunities for operating wireless communication networks by utilizing spectral resources that are adjacent to already deployed incumbent wireless systems which are sensitive to interference from these new network operations. Frequency band auctions for the currently developed and deployed LTE (Long-Term Evolution) mobile communication system belonging to the 4^{th} generation wireless access technology (4G) sell and allocate frequency bands which are very close to frequency bands which are already in use by existing wireless systems, such as, e.g., digital terrestrial or satellite broadcasting systems as, e.g., the family of Digital Video Broadcasting (DVB) systems, digital multimedia broadcasting systems, the family of Digital Audio Broadcasting (DAB) systems, or Global Positioning Systems (GPS) - just to name a few of such existing wireless systems..

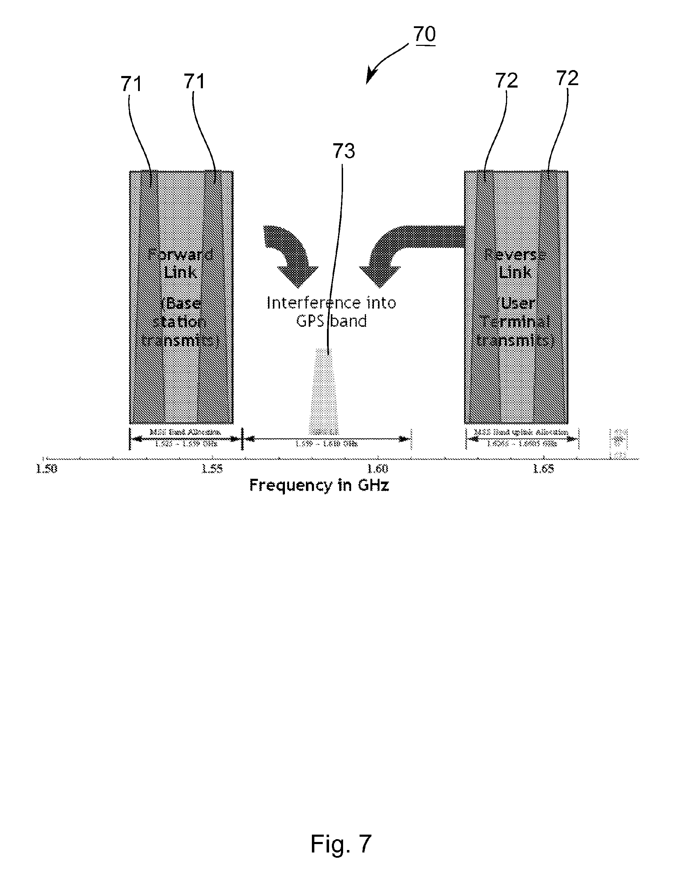

For example, DVB-T (Digital Video Broadcasting -Terrestrial) uses the UHF-Band-V (582-862 MHz) for its digital television (TV) channels 35 to 69. With at least one of the upper DVB-T channels (channel 60) being very close to the E-UTRA (Evolved UMTS Terrestrial Radio Access) downlink band 20 (791MHz- 821MHz), interference problems may appear since legacy DVB-T receivers were not designed to protect themselves against possible out-of-band interferences resulting from strong-powered mobile communication systems, such as LTE, operating in adjacent or neighboring frequency bands. As another example, a LTE network may be deployed operating on either side of a NAVSTAR GPS (Global Positioning System) band, which will also be referred to a GPS in the following. In the GPS system a Coarse/Acquisition-Code (C/A-Code) for civil use is transmitted centered at the so-called L1 frequency at 1575.42 MHz. The deployment of a LTE network using the spectrally adjacent E-UTRA downlink frequency band 24 with center frequencies in the range of 1525 MHz to 1559 MHz may pose a great threat to the operation of existing GPS receivers located in the coverage area of the LTE network due to potential out-of-band interferences from the LTE base stations (also referred to as eNodeB), which are operating spectrally only about 15 MHz away (see Fig. 7). In Fig. 7 the trapezoidal shapes 71, 72 represent LTE downlink and uplink carriers while the trapezoid 73 in the middle represents the victim GPS carrier.

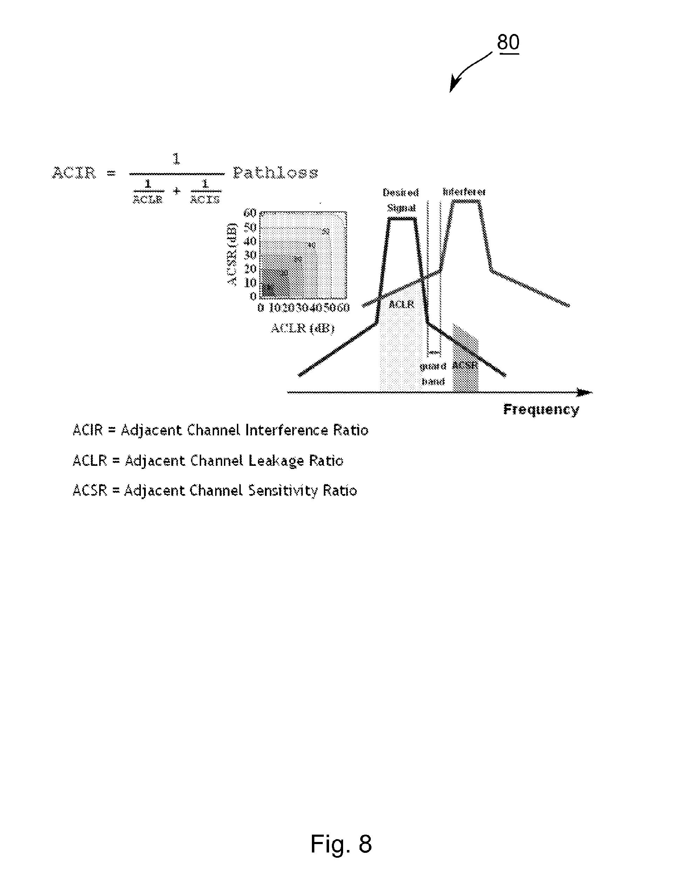

In both of the aforementioned examples, the victim of the interference is a sensitive DVB-T or GPS receiver that is trying to receive a relatively weak desired DVB-T or GPS signal from a distant DVB-T or GPS transmitter while an interfering signal is generated by a LTE base station transmitting on a nearby frequency and at a nearby geographic location. There are several interference mechanisms that are planned for, which are schematically illustrated in Fig. 8. Out-of-band emissions from the base station that fall directly onto the victim receiver's desired signal have to be filtered out to a great extent as shown as the Adjacent Channel Leakage Ratio (ACLR) in Fig. 8. This requires substantial transmit filters at the base station transmitters, which is something that adds cost and weight to a base station, but which is feasible using traditional engineering approaches. But this is only one mechanism. Another, more problematic source of interference has to do with the filtering in a GPS or DVB-T receiver. If existing receiver filters provide insufficient attenuation (known as the Adjacent Channel Sensitivity Ratio, ACSR) of the intended transmissions of the LTE base stations then the victim receiver may be "blinded" or blocked by the base station operating spectrally nearby. Fig. 8 illustrates the relationship between the Adjacent Channel Interference Ratio (ACIR), the Adjacent Channel Leakage Ratio (ACLR), and the Adjacent Channel Sensitivity Ratio (ACSR). The Adjacent Channel Interference Ratio (ACIR) is given by the combined effects of the Adjacent Channel Leakage Ratio (ACLR) from the transmitter and the Adjacent Channel Sensitivity Ratio (ACSR) set by the receiver's ability to reject the interferer's intentional transmissions it its own band.

It is well known and understood that many receivers may be blocked in this way by out-of-band transmissions, and there are known ways of improving the victim receiver's filter to ameliorate this sort of blocking interference. For example, there are some GPS or DVB-T receivers designed with a front-end RF filter that has a sufficient out-of-band rejection such that those GPS or DVB-T receivers are not unacceptably interfered with by an interfering LTE base station operating geographically and spectrally close to the GPS or DVB-T receivers.

Unfortunately, there are already many millions of GPS or DVB-T receivers on the market and already deployed, e.g. in cars, plans, phones, and other navigation and timing devices that do not have sufficient front-end filtering to operate acceptably near base stations operating in the adjacent Mobile Satellite Band (1525 to 1559 MHz). These legacy GPS or DVB-T receivers were designed without any expectation of terrestrial base stations operating in the adjacent frequency bands, and so they are typically using more relaxed front-end RF filter designs.

Experiments are indicating that many legacy GPS or DVB-T receivers may be blocked by the aforementioned out-of-band interference and consequently, official authorities may finally prohibit the use of the Mobile Satellite Band (1525 to 1559 MHz) for the deployment of new LTE wireless communication systems or limit the use of 3GPP (3rd Generation Partnership Project) band 20 (791 to 821 MHz), adjacent to DVB-T channel 60 at 786 MHz. These figures are only exemplary and may vary in different geographical regions.

Several modem wireless air interfaces, such as GSM (Global System for Mobile Communications) as well as LTE have a peculiar time signature that is particularly problematic for sensitive receivers of other wireless systems, such as, for example, the aforementioned DVB-T and GPS receivers. The GSM or LTE wireless air interfaces both use a time slot structure such that there are times when a base station may transmit nothing at all (e.g. when there is no traffic data to be sent) but in the next time frame, slot or symbol interval the same base station transmits at full power. For example, the LTE downlink signal is done in such way that during a complete OFDM (Orthogonal Frequency-Division Multiplexing) symbol, a power amplifier (PA) is not necessarily always on. More than this, in an empty cell (i.e. during periods when the cell load is zero), only common channels are broadcasted. Common channels are accessible and shareable by a variety of mobile communication devices. The LTE system uses common channels to send commands or instructions, such as system or device identification information, to all mobile devices operating in a cell coverage area. Dedicated channels are accessible by one or several designated devices. The LTE system uses dedicated channels to send information to a specific device (such as voice or data information). This dedicated information will be also referred to as useful data in the following.

If an LTE signal is magnified in the time domain, one will see that in a low-load scenario only some of the available sub-carriers are active. As a consequence, transmit power is turned on only during a limited time and is then switched off for another amount of time. These power transients are particularly troublesome and degrade the Adjacent Channel Sensitivity Ratio (ACSR). If the victim's receiver is not able to track the on-off power variations of the interferer such as in an AGC or detector circuit, then the receiver can be effectively "blinded" by the interferer, and more than it would had the interferer been constant in its transmit power.

This can result in a geographical area around a LTE base station (eNodeB) in which DVB-T or GPS receivers are interfered with when the cell is not fully loaded with traffic.. With state-of-the-art smartphones embedding several applications requiring short data transfers (i.e. geo-localization, widgets update, etc.) the impact on a potentially interfered DVB-T or GPS coverage area may increase drastically.

Such a situation may be compared to flashing a very bright yellow light at someone who is trying to look at a weak blue object in the distance. The bright light 'blinds' the observer and, because the observer's eyes respond to the bright light by constricting the iris so that the observer is unable to see the distant blue object. The reception of the signal at the higher frequency is blocked by the flashing interfering signal at the yellow frequency.

In the same way, the sensitive DVB-T or GPS receivers may be blinded by the flashing signal from a LTE base station located nearby, for example. Specifically, an automatic gain control (AGC) circuitry protecting a low noise amplifier (LNA) of the DVB-T or GPS receiver from strong signals may not be able to track the flashing signal from the interfering LTE base station, which leads to the blocking of the desired DVB-T or GPS signals. Thereby an AGC is an adaptive system which may be found in many electronic devices such as RF (Radio Frequency) receivers. An average output signal level is fed back to adjust a receiver gain to an appropriate level for a range of input signal levels.

In order to overcome the aforementioned blocking situation one could e.g. reduce the LTE base station's output power by several dB (down to 20dB). However, this is not an adequate solution for many operators since this will lead to 10, 30 or 100 times increase in the number of required base stations for a sufficient coverage. One could also provide an improved rejection filter for the LTE frequencies to each DVB-T or GPS receiver. However, with millions of already installed DVB-T or GPS legacy receivers this is also not feasible.

Another approach could be to use a different antenna polarization for both systems. For example, one could keep a horizontal polarization for DVB-T or GPS and use a vertical polarization for LTE (instead of a cross polarization). However, this approach may only gain a maximum of 10 dB reduced (out-of-band) interference which is not enough on the one hand, and it will also avoid the use of MIMO-configurations (Multiple-Input Multiple-Output), which provides much system gain in LTE which makes use of polarization diversity, on the other hand. Further, one could also avoid the use of the aforementioned critical E-UTRA downlink bands, as e.g. the E-UTRA downlink bands 20 or 24. However, this would not only be a loss for a country selling the respective frequency band, but also for all the countries where an already used signal band, as e.g. the upper DVB-T signal or the GPS signal, is close to one of the E-UTRA downlink bands.

Hence, it is desirable to reduce the blocking interference to the millions of sensitive receivers of a second wireless system, as e.g. DVB-T or GPS, by adjusting the transmissions of a base station of a first wireless system using an adjacent frequency.

### Summary

Embodiments may be based on the finding that the blocking interference to millions of sensitive legacy receivers, such as, e.g., DVB-T or GPS receivers, may be reduced by adjusting a wireless base station's transmissions. Embodiments adjust a base station's transmissions by reducing the amount by which the transmissions "Flash" that is to say, the on-off ratio of the transmissions. According to embodiments, this may be done by injecting dummy symbols or content during those time intervals when the air interface of the wireless communication system would normally turn off transmissions. While there may still be modulation of the transmit signal, causing some variation in the transmit signal's strength, the time variation of the base station's transmissions is much less compared to not using said dummy symbols or content, i.e. dummy load. Hence, base stations, according to embodiments, may only weakly "flicker" an otherwise fairly constant signal instead of flashing an interfering signal. The resulting fairly constant signal is found to not cause as much interference to existing legacy receivers, such as GPS or DVB-T receivers.

Embodiments relate to a concept for mitigating interference from a first wireless or mobile communication system to a second wireless system. Embodiments of the present invention provide an apparatus for a base station transmitter of the first wireless communication system, the apparatus comprising means for determining a transmit load of the base station transmitter, and means for generating a dummy load during a time period when the determined transmit load falls below a predefined load-threshold, such that time-domain transmit signal variations of the base station transmitter are reduced due to the generated dummy load during the time period. The transmit load may be understood as an extent to which available physical transmit resources, like time or frequency intervals, are occupied by the base station transmitter. That is, a low transmit load means that only few of the available physical transmit resources are occupied with useful data. Contrary, a high transmit load means that a lot or all of the available physical transmit resources are occupied with useful data.

In mobile communications physical transmit resources are allocated to a base station for transmitting data in the downlink from the base station to an associated mobile station or UE (User Equipment). An LTE mobile communications system relies on OFDM (Orthogonal Frequency-Division Multiplexing) as digital multi-carrier modulation method. A large number of closely-spaced orthogonal sub-carriers (sub-carrier bandwidth 15 kHz) are used to carry data. The data is divided into several parallel data streams or channels, one for each sub-carrier. Each sub-carrier may be modulated with a conventional modulation scheme (such as quadrature amplitude modulation or phase-shift keying) at a comparatively low symbol rate. Hence, for OFDM base wireless communication systems, such as LTE, transmit resources are time (e.g. an OFDM symbol period) and frequency (e.g. a sub-carrier).

A transmit load of 100% is achieved when a base station transmits using all its available resources in time and frequency for communicating useful data to its associated mobile stations. In contrast thereto, a base station experiences a transmit load of 0% when no dedicated data is transmitted to any mobile station. When the cell is empty, which corresponds to a transmit load of 0%, only common channels and reference signals are transmitted by an LTE base station using only few of the available time and frequency resources. In the time domain, these common channels and reference signals are not present in every OFDM symbol, meaning that during one or several OFDM symbol intervals, conventionally no power is transmitted over the air. However, embodiments of the present invention counteract this conventional situation by determining or measuring a current transmit load of the base station transmitter and by generating a dummy load when the determined transmit load falls below the predefined load-threshold. Therewith time-domain transmit signal variations of the base station transmit signal may be reduced which helps to reduce disturbances experienced by receivers of other wireless systems, such as (digital) terrestrial or satellite broadcasting systems as, e.g., the family of DVB systems (e.g. DVB-S, DVB-S2, DVB-T, DVB-T2 , DVB-H, DVB-SH), digital multimedia broadcasting systems (e.g. DTMB, DMB), the family of digital audio broadcasting systems (e.g. DAB, DAB+, DAB Surround, DRM), or global navigation or positioning systems (e.g. GPS, Galileo). Although embodiments may be used for mitigating interference to an arbitrary second wireless system, which uses a spectrum close to the first wireless or mobile communication system (e.g. LTE), embodiments of the present invention will be described exemplarily referring to digital broadcasting or satellite based systems, such as e.g. DVB-T or GPS.

According to some embodiments the predefined load-threshold may correspond to a downlink cell load of 20%, 10%, 5% or even 1%. This means that a base station may insert dummy data, i.e. data containing no intelligible information for a mobile terminal, in unused physical transmit resource blocks, when the load of the cell's serving base station falls below one of the aforementioned thresholds, thereby reducing the on-off ratio or increasing the duty cycle of the base station's transmit signal. In particular for LTE based communication systems using OFDM, a used or unused physical transmit resource block comprises a plurality of OFDM symbol intervals and a plurality of sub-carriers. In other words, the means for generating may be configured to generate dummy transmit data symbols for normally unused physical transmit resources as the dummy load. These dummy data symbols may then be transmitted by the base station using the normally idle transmit resources. Here, "normally" or "conventional" is to be understood as a case when embodiments of the present invention were not employed.

According to some embodiments dummy load may be generated to fully load all physical transmit resource blocks. I. e., the means for generating the dummy load may be adapted to generate dummy load corresponding to a transmit load of 100% if the determined transmit load falls below the predefined load-threshold, such that time-domain transmit signal variations of the base station transmitter are reduced to a maximum extent. The means for generating the dummy load may hence be adapted to generate dummy load such that the resulting transmit load is always adjusted to 100%, even if there is no dedicated communication, i.e. useful data, between the base station and any associated mobile terminals. All unused physical transmit resource blocks may hence be filled with the generated dummy data.

In case of an exemplary LTE bandwidth of 10 MHz, and when a cell is empty, one can consider a duty cycle of about 33% of the resulting transmit signal in the time domain, and a spectral occupancy in average around 20% (when OFDM symbols are not null symbols) considering the number of resource elements (RE) occupied by Reference Signal (RS), Physical Broadcast Channel (PBCH), Primary Synchronization Signal (PSS), Secondary Synchronization Signal (SSS), Physical Control Format Indicator Channel (PCFICH) and Physical Hybrid ARQ Indicator Channel (PHICH). This explains why an output power of an RRH (Remote Radio Head) is 11 dB higher when an OCNS (Orthogonal Channel Noise Simulation) of 100% is used (corresponding to a fully loaded cell), compared to an empty cell (6.5 dB coming from spectral occupancy and 4.5 dB coming from duty cycle). Thereby a RRH is equipment used in wireless communications systems. This type of equipment is used in all wireless technologies like GSM, CDMA, UMTS, and LTE. As this radio equipment is remote to a base station (BTS/NodeB/eNodeB), it is called remote radio head. They are generally connected to the base station via a fiber optic cable using common public radio interface protocols.

According to embodiments the means for generating the dummy load is configured to generate the dummy load such that a receiver device of the second wireless system being located in the vicinity of the base station transmitter experiences less (out-of-band) interference due to the base station transmitter compared to a transmit signal without said dummy load. Some embodiments propose to generate the dummy load for only a predefined amount of the normally unused physical transmit resource blocks (within one downlink time slot). The predefined amount may, for example, correspond to 10% to 30% of the unused physical resource blocks (PRBs). A specific embodiment proposes to allocate 20% of the unused transmit resource blocks to the generated dummy data when corresponding OFDM symbols would normally be null, in order to have a 100% duty cycle of the resulting transmit signal and therefore avoiding prohibitive power variation of the transmit signal in the time domain. For LTE this may result in a transmitted power 4.5 dB higher compared to a conventional implementation. Hence, the overall transmitted power of an empty cell will increase using embodiments. However, jamming or blocking of sensitive receivers of another wireless system spectrally and geographically in vicinity to the base station may be avoided or at least reduced.

The means for determining the transmit load and/or the means for generating the dummy load may be activated or deactivated -depending on the scenario of deployment. In case the base station is using a downlink frequency band such that it does not interfere with a frequency band used by closely located sensitive receivers of a second wireless system, the means for determining the transmit load and/or the means for generating the dummy load may e.g. be deactivated, thus allowing a normal/conventional operation of the base station. However, if the base station is using a downlink frequency band such that it does generate interference with a frequency band used by closely located sensitive receivers of a second wireless system, the means for determining the transmit load and/or the means for generating the dummy load may be activated, thus allowing a mode of operation of the base station, which may still allow the nearby sensitive receivers to receive and decode their related signals (e.g. DVB-T or GPS signals) without being blocked or jammed by the base station operating in the adjacent frequency band. Hence, according to some embodiments the apparatus may further comprise an activation means for activating the means for determining the transmit load and/or the means for generating the dummy load in case the base station transmitter is operated in a first wireless communication system operating at a first radio frequency band adjacent or neighboring to a second radio frequency band of a second wireless system. As has been explained above, the first wireless communication system may be an LTE wireless communication system and the second wireless system may belong to the group of DVB-T or GPS systems. The activation means may comprise an interface over which a network operator may send an activation or deactivation command to the apparatus.

Correspondingly, such critical adjacent first and second frequency bands may be certain E-UTRA frequency bands on the one hand and the GPS and/or DVB-T frequency bands on the other hand. In particular, the first radio frequency band may be the E-UTRA downlink frequency band 20 ranging from 791 MHz to 821 MHz and the second radio frequency band may be the UHF-Band-V ranging from 582 MHz to 862 MHz, particularly the frequency allocated to DVB-T channel 60. In other embodiments the first radio frequency band may also be the E-UTRA downlink frequency band 24 ranging from 1525 MHz to 1559 MHz and the second radio frequency band may be the Global Positioning System frequency band L1 centered at 1575.42 MHz.

Yet further embodiments also provide a method for reducing jamming or blocking of sensitive receivers of a second wireless system being spectrally and geographically in vicinity to a base station of a first wireless system transmitting a transmit signal from a base station transmitter. The method comprises a step of determining a transmit load of the base station transmitter, and a step of generating a dummy load during a time period when the determined transmit load falls below a predefined load-threshold, such that time-domain transmit signal variations of the base station transmitter are reduced due to the generated dummy load during the time period of low transmit load.

Some embodiments comprise digital control circuits installed within the apparatus' electrical circuitry. Such a digital control circuit, e.g. a digital signal processor (DSP), needs to be programmed accordingly. Hence, yet further embodiments also provide a computer program having a program code for performing at least a step of embodiments of the aforementioned method, when the computer program is executed on a computer or a digital processor.

Embodiments of the present invention may allow mobile network operators (MNOs) to use frequencies next to currently used DVB-T or GPS channels, for example. LTE base stations may therefore be modified in that they send dummy data during normally unused downlink physical resource blocks. This may lead to a drastic improvement with respect to the blocking interference levels experienced by sensitive receivers, e.g. GPS and/or DVB-T receivers, co-existing with high powered wireless communication systems, such as, e.g. LTE. The adjacent frequencies which become usable may also have a positive impact on the frequency price that each MNO will have to pay for.

### Brief description of the Figures

Some embodiments of apparatuses and/or methods will be described in the following by way of example only, and with reference to the accompanying figures, in which
- Fig. 1: shows a schematic block diagram of an apparatus for a base station transmitter, according to an embodiment;
- Fig. 2: schematically shows a time-domain signal power variation of an LTE base station in an empty cell;
- Fig. 3: schematically shows two curves representing protection ratios of a DVB-T set-top box in vicinity of an empty and a fully-loaded LTE cell;
- Fig. 4: schematically shows a comparison of a time-domain signal power variation of an LTE base station in an empty cell with and without the usage of embodiments of the present invention;
- Fig. 5: shows a schematic flow-chart of a method for a base station transmitter, according to an embodiment;
- Fig. 6: schematically shows two curves representing protection ratios of a DVB-T set-top box in vicinity of an empty cell with and without the usage of embodiments of the present invention;
- Fig. 7: schematically illustrates a frequency band plan comprising neighboring LTE and GPS frequencies; and
- Fig. 8: schematically illustrates a relationship between an Adjacent Channel Interference Ratio (ACIR), an Adjacent Channel Leakage Ratio (ACLR) from the transmitter and an Adjacent Channel Sensitivity Ratio (ACSR).

### Description of Embodiments

Various example embodiments will now be described more fully with reference to the accompanying drawings in which some example embodiments are illustrated. In the drawings, the thicknesses of layers and/or regions may be exaggerated for clarity.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

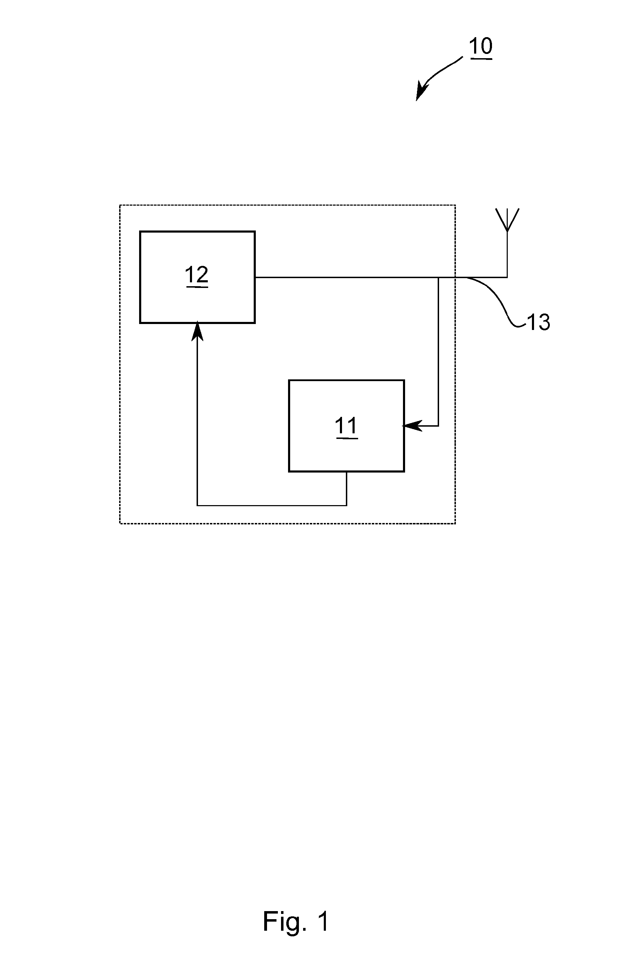

Fig. 1 schematically shows block diagram of an apparatus 10 for a base station transmitter, according to an embodiment.

The apparatus 10 comprises means 11 for determining a transmit or downlink load of the base station transmitter, and means 12 for generating a dummy load when the determined transmit load falls below a predefined load-threshold, such that time-domain transmit signal variations of the base station transmitter are reduced due to the generated dummy load. For that purpose the means 11 for determining the transmit load may be coupled to a transmit signal output 13 of a transmitter device which may comprise the means 12 for generating the dummy load. The transmit load may be determined e.g. by measuring a downlink signal variation or by determining an amount of unused physical resource blocks (PRBs), which may comprise time and/or frequency intervals. The means 11 for determining the transmit load may also be coupled to the transmitter device for forwarding a dummy load generation command to the transmitter device based on the determined downlink load or the corresponding downlink signal variation of the base station.

Although not limited thereto, the apparatus 10 may adapted to be used in a base station of an OFDM based wireless communication system, such as e.g. LTE, according to embodiments. For LTE 43 E-UTRA frequency bands have been specified. Some of them are spectrally very close to frequency bands of already existing wireless systems, such as e.g. DVB-T or GPS (NAVSTAR GPS). Embodiments may be particularly useful when used in LTE base stations using a first radio frequency band corresponding to the E-UTRA downlink frequency band 20 ranging from 791 MHz to 821 MHz or to the E-UTRA downlink frequency band 24 ranging from 1525 MHz to 1559 MHz. In such a scenario sensitive GPS receivers operating in a second, adjacent radio frequency band corresponding to the GPS frequency band L1 centered at 1575.42 MHz or sensitive DVB-T receivers operating in a second, adjacent radio frequency corresponding to the UHF-Band-V ranging from 582 MHz to 862 MHz may be protected from unwanted receiver frontend saturation (blocking) and/or intermodulation products due to the LTE base station transmitter operating nearby.

Advantageously, embodiments of the present invention may only be used when it is required, as for example in the aforementioned frequency scenarios. When a LTE base station uses E-UTRA frequency bands, which are not prohibitively interfering other wireless systems, the features according to embodiments may be deactivated or turned off. The dummy load generation could hence be a software-tunable feature. Hence, apparatus 10 may further comprise an activation means (not shown) for activating the means 11 for determining the transmit load and/or the means 12 for generating the dummy load, in case the base station transmitter is operated in a first wireless communication system (e.g. LTE) operating at a first radio frequency band adjacent or neighboring to a second radio frequency band of a second wireless system (e.g. DVB-T or GPS), such that receivers of second wireless system would otherwise be blocked or jammed.

As has been explained before, a certain downlink or transmit load level of an LTE base station translates into a corresponding duty cycle or signal power variation of the overall time-domain transmit signal. The lower the transmit load, the lower is the duty cycle and, hence, the higher is the transmit signal power variation. In case the downlink load and, hence, the duty cycle of the transmit signal falls below a given threshold, which may be the case when the cell is empty (i.e. not loaded), sensitive receivers of co-existing and co-located wireless systems using adjacent frequency bands, such as GPS or DVB-T, may be jammed or blocked due to strong out-of-band interference caused by the base station's transmit signal. DVB-T and/or GPS receivers embed in their respective RF front-end an automatic gain controller, which allows maintaining a certain signal level at the input of a mixer or an ADC (Analog-to-Digital Converter), whatever the received signal strength of the received signal is. The AGC circuitry of the GPS or DVB-T receivers may, however, not be able to track the on/off signal variations of nearby LTE base stations, which may lead to the blocking of the desired GPS or DVB-T signals.

In order to avoid this jamming or blocking phenomenon, the means 12 for generating the dummy load may be configured to generate the dummy load such that a receiver device of a co-existing second wireless system, such as GPS or DVB-T, being located spectrally and geographically in the vicinity of the base station transmitter experiences less interference due to the base station transmitter compared to a conventional transmit signal without said dummy load. For this purpose the means 12 for generating the dummy load may be configured to generate or inject the dummy load when the determined transmit load falls below a threshold of 20%, 10%, 5% or even below 1%, e.g. 0%.

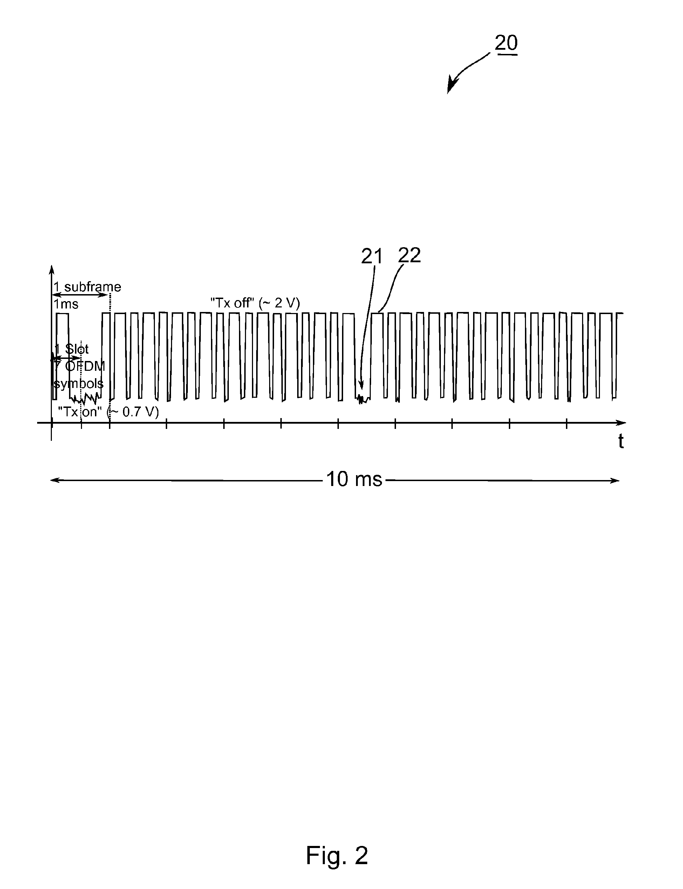

In the context of the present specification a downlink or transmit load of 0% denotes a scenario where no physical resource blocks are used for dedicated communication between the base station and mobile terminals. Consequently, in a case where 10% of the available physical resource blocks are used for dedicated communications between the base station and associated mobile terminals, e.g. via dedicated channels, we speak of a downlink or transmit load of 10%. When the cell is empty (transmit load 0%), only common channels (e.g. Physical Broadcast Channel (PBCH), Primary Synchronization Signal (PSS), Secondary Synchronization Signal (SSS), Physical Control Format Indicator Channel (PCFICH), Physical Hybrid ARQ Indicator Channel (PHICH)) and reference signals are transmitted from the base station. In the time domain, these common channels and reference or pilot signals are not present in every OFDM symbol, meaning that during one or several (unused) OFDM symbols, no power is transmitted over the air. The transition between an unused or null symbol and a used or occupied symbol is the reason of this fast changing channel level that disturbs GPS or DVB-T receivers. This is schematically shown in Fig. 2.

Fig. 2 schematically illustrates a power variation 20 in the time domain of an empty LTE cell (load of 0%), i.e. a cell, where only common channels and reference signals are transmitted from the base station. The Fig. 2 shows, in the time domain, measured output power variations 20 of an LTE signal over one radio frame (i.e. 10ms). The exemplary snapshot was made using an oscilloscope to which a conventional LTE signal was connected using an RF power detector. Due to the method used to produce the graph of signal strength versus time of Fig. 2, the graph shows "Transmitter on" low on the y-axis and "Transmitter off" higher on the y-axis. Hence, without the presence of an LTE transmit signal, the shown signal amplitude is depicted high on the y-axis, whereas in case of signal presence, the curve shows a signal amplitude low on the y-axis. The signal's on/off variation may be as high as 150 dB in this example.

During a silent time period 22, i.e. a time period where there is no detectable transmit signal from the base station, an AGC circuitry of a co-located GPS or DVB-T receiver will set a high gain for its receiver circuitry in order to be able to receive own potentially weak GPS or DVB-T signals. However, when the silent time period 22 changes to a time period 21 where a relatively high-powered transmit signal is emitted from the LTE base station in the adjacent frequency band (e.g. E-UTRA band 20 or 24), the high receiver gain still set by the rather slow reacting AGC will lead to a strong out-of-band-interference, i.e. to a blocking or jamming of the actually wanted GPS or DVB-T signal.

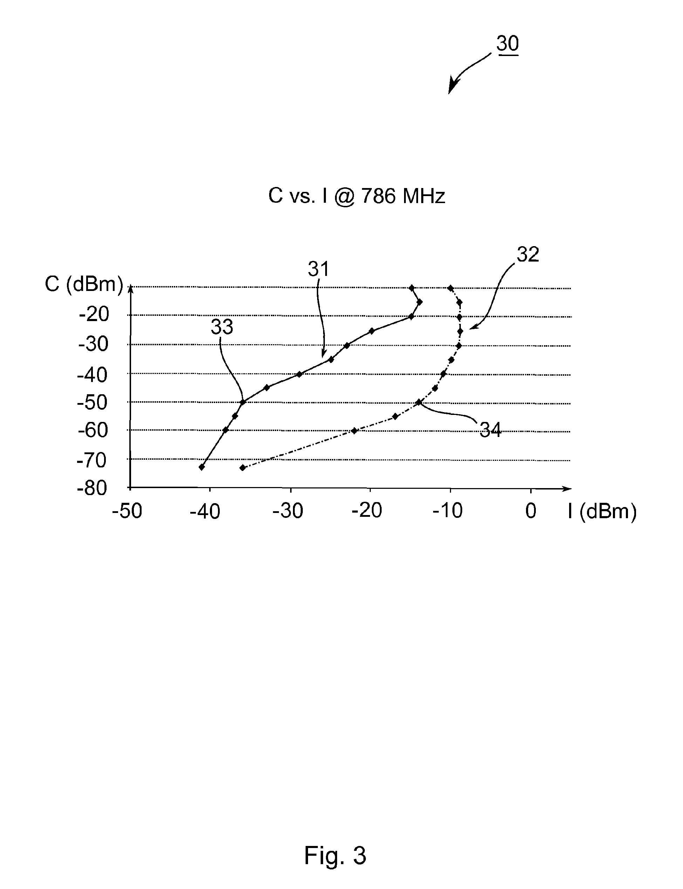

A parameter called "protection ratio" is commonly used to describe a minimum value of a wanted-to-unwanted signal ratio (C/I-ratio; Carrier-to-Interference ratio), usually expressed in decibels (dB), at a receiver input determined under specified conditions such that a specified reception quality of the wanted signal is achieved at a receiver output. Fig. 3 schematically shows a measured protection ratio (C/I-ratio) for a DVB-T set-top box tuned to DVB-T channel 60 (786 MHz) facing a spectrally and geographically closely spaced out-of-band interfering LTE base station operating at E-UTRA downlink frequency band 20 (791 MHz to 821 MHz).

As shown in Fig. 3 the protection ratio of a DVB-T receiver can be degraded by more than 20 dB when a spectrally and geographically closely spaced LTE cell is empty (i.e. only common channels are broadcasted) (see curve 31) compared to a fully loaded cell (OCNS 100%) (see curve 32). In practical, this means that any TV set antenna in an area where DVB-T and LTE signals are quite high and in a range of 10 ∼ 20 dB difference will be interfered each time the LTE cell is empty. For example, with the DVB-T receiver receiving a DVB-T signal of -50 dBm, an LTE level of -36 dBm will block the DVB-T reception in case of an empty cell (see point 33), whereas the blocking level is only about -14 dBm in case of a fully loaded cell (see point 34).

By inserting dummy data, i.e. data actually containing no useful information for mobile terminals, at unused physical resource blocks, i.e. normally idle OFDM symbol intervals and frequency sub-carriers normally not used to send useful data symbols, the 60 dB signal power variation 20 of the empty cell transmit signal depicted in Fig. 2 may be drastically decreased, allowing an AGC circuitry of a co-located sensitive GPS or DVB-T receiver to better track or adjust to the resulting decreased signal variations of the nearby LTE base station using an adjacent frequency band. Therewith the described blocking effects due to receiver frontend saturation may be reduced.

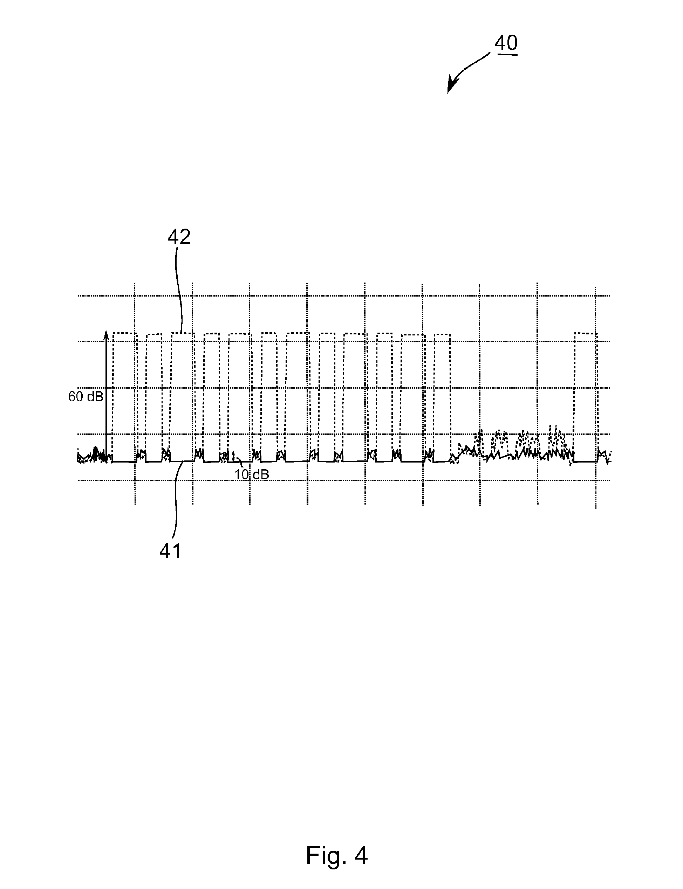

Decreased signal variations due to the insertion of dummy data at unused physical resource blocks are schematically shown in Fig. 4.

Curve 42 of Fig. 4 schematically denotes a conventional LTE base station output power in the time domain experienced at a co-located GPS or DVB-T receiver operating in a frequency band adjacent to the used E-UTRA frequency band (e.g. band 20 or 24), when no dummy data is inserted in an empty-cell scenario. The signal variation is about 60 dB. In contrast, curve 41 schematically denotes the time-domain variation of an LTE base station output power experienced by a co-located GPS or DVB-T receiver operating in a frequency band adjacent to the used E-UTRA frequency band, in case dummy data is inserted when the cell is empty or not loaded, in accordance with embodiments. Here, the signal variation is only about 10 dB.

The dummy data, which is inserted at (normally) unused physical resource blocks, thereby may be generated from pseudo-random bit sequences, for example, which again may be generated with a pseudo-random bit sequence or pseudo-noise (PN) generator. However, if additionally a certain peak-to-average-power ratio (PAPR) is envisaged it may be advantageous to use particularly designed dummy data at predefined unused resource blocks within a downlink time slot or a downlink radio frame.

In some embodiments the means 12 for generating may be adapted to generate the dummy load for only a predefined amount of the available unused transmit resource blocks within a downlink time interval. For example, only each fifth unused physical resource block may be occupied with dummy data. Also, within a physical resource block only certain symbol intervals and/or certain sub-carriers may be used for transmitting the dummy data. This has the advantage that the duty cycle may be increased to a desired extend while keeping a related transmit power increase within reasonable limits. The predefined amount of normally empty transmit resource blocks now used for dummy data may, for example, correspond to 10% to 30% of the normally empty or unused transmit resource blocks, including symbol time intervals and frequency sub-carriers. In a specific embodiment 20% of the unused transmit resource blocks are allocated to dummy data when corresponding OFDM symbols are null, in order to have a 100% duty cycle of the resulting transmit signal and therefore avoiding prohibitive power variation in the time domain. For LTE this may result in a transmitted power, which is 4.5 dB higher compared to the conventional implementation without dummy data in an empty cell scenario. Hence, the overall transmitted power of an empty cell will increase. However, jamming or blocking of sensitive receivers of another wireless system in vicinity to the base station may be avoided or at least reduced.

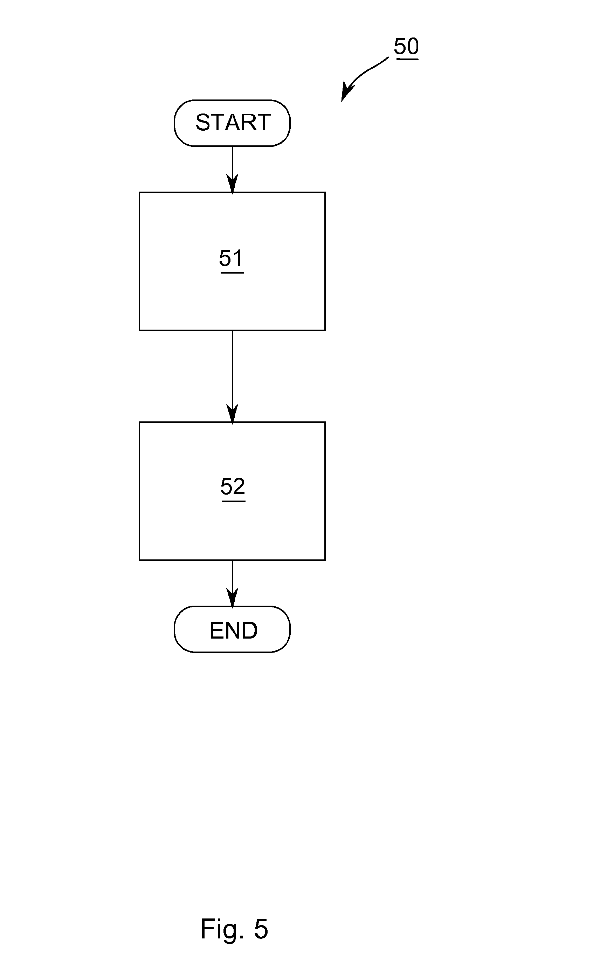

Fig. 5 shows a schematic flow-chart of a method 50 for a base station transmitter, according to an embodiment.

The method comprises a step 51 of determining a transmit load or a transmit signal variation of the base station transmitter, and a step 52 of generating a dummy load during a time period when the determined transmit load falls below a predefined load-threshold or the transmit signal variation exceeds a predefined variation-threshold, such that time-domain transmit signal variations of the base station transmitter are reduced due to the generated dummy load during the time period.

The aforementioned apparatus 10 may comprise a signal processor executing a computer program having a program code for performing or supporting at least one of the above described method-steps 51, 52 when the computer program is executed on said processor. Hence, embodiments may provide a computer program having a program code for performing one of the above described methods when the computer program is executed on a computer or processor. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

To summarize, embodiments of the present invention may enable mobile network operators (MNOs) to use LTE frequencies next to currently used wireless systems, such as digital media broadcasting systems or global navigation or positioning systems, also including DVB-T or GPS channels, for example. An LTE base station may therefore be modified in that it sends dummy data during normally unused downlink physical layer resource blocks. This may preferably be done when a cell is empty, i.e., when the base station experienced no significant downlink load.

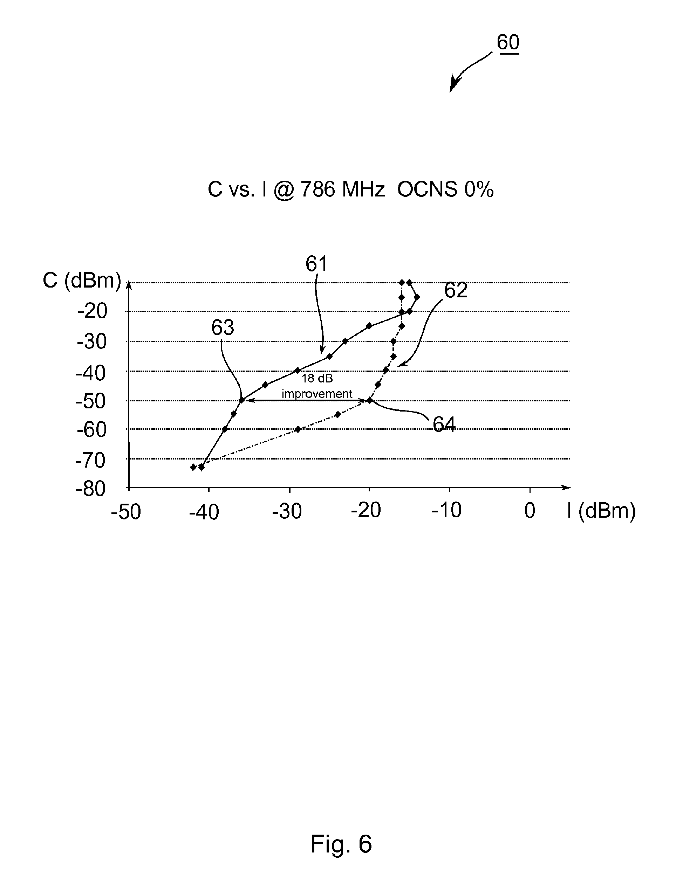

As it is illustrated in Fig. 6, which has to be compared with Fig. 3, embodiments may lead to a drastic improvement with respect to the interference levels experienced by sensitive receivers, e.g. GPS and/or DVB-T receivers, co-existing with high powered wireless communication systems, such as, e.g. LTE. Curve 61 corresponds to curve 31 of Fig. 3, i.e. curve 61 represents the experienced protection ratio of a DVB-T receiver in the presence of an empty LTE cell operating in the nearby E-UTRA frequency band 20. Curve 62 reflects the same co-existence scenario between LTE and DVB-T. However, a base station serving the empty LTE cell is equipped with the apparatus 10 and/or executes the method 50, according to embodiments. Hence, in case of a DVB-T signal of - 50dBm, the blocking level may be significantly improved (approx. 18 dB) when applying embodiments of the present invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a base station transmitter, the apparatus comprising:
means (11) for determining a transmit load of the base station transmitter; and
means (12) for generating a dummy load when the determined transmit load falls below a predefined load-threshold, such that time-domain transmit signal variations of the base station transmitter are reduced due to the generated dummy load.

2. The apparatus (10) according to claim 1, wherein the predefined load-threshold denotes a transmit loads between 0% and 20%.

3. The apparatus (10) according to claim 1, wherein the means (12) for generating is configured to generate the dummy load in unused physical transmit resource blocks.

4. The apparatus (10) according to claim 3, wherein a physical transmit resource block may be one of a time or a frequency interval or a combination thereof.

5. The apparatus (10) according to claim 1, wherein the means (12) for generating is configured to generate dummy transmit symbols as the dummy load when the base station transmitter does not transmit any dedicated useful data symbols.

6. The apparatus (10) according to claim 3, wherein the means (12) for generating is configured to generate the dummy load for only a predefined amount of the unused physical transmit resource blocks within a downlink time interval.

7. The apparatus (10) according to claim 3, wherein the predefined amount corresponds to 10% to 30% of the unused physical transmit resource blocks.

8. The apparatus (10) according to claim 1, wherein apparatus further comprises an activation means for activating or deactivating the means (11) for determining the transmit load and/or the means (12) for generating the dummy load in case the base station transmitter is operated in a first wireless communication system operating at a first radio frequency band adjacent to a second radio frequency band of a second wireless system.

9. The apparatus (10) according to claim 8, wherein the first wireless communication system belongs to the group of a GSM or LTE wireless communication system and wherein the second wireless system belongs to the group of a digital media broadcasting system or a global navigation or positioning system.

10. The apparatus (10) according to claim 8, wherein first radio frequency band is one of an E-UTRA downlink frequency band 20 ranging from 791 MHz to 821 MHz or E-UTRA downlink frequency band 24 ranging from 1525 MHz to 1559 MHz.

11. The apparatus (10) according to claim 8, wherein second radio frequency band is one of a Global Positioning System frequency band L1 centered at 1575.42 MHz or the UHF-Band-V ranging from 582 MHz to 862 MHz.

12. The apparatus (10) according to claim 8, wherein the means (12) for generating the dummy load is configured to generate the dummy load such that a receiver device of the second wireless system being located in the vicinity of the base station transmitter experiences less interference due to the base station transmitter compared to a transmit signal without said dummy load.

13. The apparatus (10) according to claim 1, wherein the apparatus is adapted to be used in a base station of an OFDM based wireless communication system.

14. A method (50) for transmitting a transmit signal from a base station transmitter, the method comprising:
determining (51) a transmit load of the base station transmitter; and
generating (52) a dummy load when the determined transmit load falls below a predefined load-threshold, such that time-domain transmit signal variations of the base station transmitter are reduced due to the generated dummy load.

15. A computer program having a program code for performing the steps of the method of claim 14, when the computer program is executed on a computer or processor.
